# EUROPÄISCHE PATENTSCHRIFT

(11) **EP 4 107 035 B1**
(45) Veröffentlichungstag und Bekanntmachung des Hinweises auf die Patenterteilung: **16.07.2025**
(21) Anmeldenummer: 21706893.1
(22) Anmeldetag: 18.02.2021
(51) Int. Cl.: B60R 13/02, B62D 1/04

(54) **LENKRADBAUGRUPPE SOWIE ABDECKELEMENT FÜR EINE SOLCHE LENKRADBAUGRUPPE**
STEERING WHEEL ASSEMBLY AND COVER ELEMENT FOR A STEERING WHEEL ASSEMBLY OF THIS KIND
ENSEMBLE VOLANT DE DIRECTION ET ÉLÉMENT DE RECOUVREMENT POUR UN TEL ENSEMBLE VOLANT DE DIRECTION

(30) Priorität: 21.02.2020 DE 202020100955 U
(43) Veröffentlichungstag der Anmeldung: 28.12.2022
(73) Patentinhaber: ZF Automotive Safety Germany GmbH, 63743 Aschaffenburg (DE)
(72) Erfinder: HAAS, Markus, 64760 Oberzent (DE); FUCHS, Michael, 63825 Westerngrund (DE); BATHON, Michael, 63766 Mömbris (DE)
(74) Vertreter: ZF LIFETEC Intellectual Property
(86) Internationale Anmeldenummer: PCT/EP2021/053941
(87) Internationale Veröffentlichungsnummer: WO 2021/165351

(56) Entgegenhaltungen:
- EP-B1- 1 813 503
- DE-U1- 20 009 877
- DE-U1- 202017 105 933

## Beschreibung

Die Erfindung betrifft eine Lenkradbaugruppe für ein Kraftfahrzeug, umfassend ein Lenkradskelett, ein rückseitiges Abdeckelement zur Verkleidung einer Skelettrückseite, welche im montierten Zustand der Lenkradbaugruppe einer Armaturentafel des Kraftfahrzeugs zugewandt ist, sowie eine frontseitige Blende zur Verkleidung einer Skelettvorderseite, welche im montierten Zustand der Lenkradbaugruppe von einer Armaturentafel des Kraftfahrzeugs abgewandt ist, wobei das rückseitige Abdeckelement und die frontseitige Blende aneinander angrenzen und miteinander verbunden sind.

Die EP 1 813 503 B1 offenbart eine Lenkradbaugruppe, bei der eine (frontseitige) Verkleidungsplatte und eine hintere (rückseitige) Abdeckung mittels einer Schnappverbindung verbunden sind. Schnappverbindungen weisen den Vorteil auf, dass sie mit geringem Aufwand schnell montierbar und für einen Fahrzeuginsassen von außen nicht sichtbar sind.

Nachteilig ist bei Schnappverbindungen die sogenannte "Verrastluft", also ein gewisses Spiel, das benötigt wird, um die jeweiligen Bauteile miteinander zu verrasten. Ein solches Spiel kann im Fahrbetrieb zu einer Relativbewegung zwischen den verrasteten Bauteilen und damit zu unerwünschten Klapper- oder Vibrationsgeräuschen führen.

Die gattungsgemäße DE 200 09 877 U1 offenbart eine Lenkradbaugruppe mit den Merkmalen im Oberbegriff des Anspruchs 1, wobei ein Lenkradkörper einstückig angeformte, elastische Lippen aufweist, welche die beiden Lenkradverkleidungsteile bezüglich des Lenkradkörpers zentrieren. Ein solches Anformen elastischer Lippen an den Lenkradkörper ist jedoch fertigungstechnisch aufwendig und insbesondere im Nabenbereich der Lenkradbaugruppe problematisch.

Aufgabe der Erfindung ist daher die Schaffung einer mit geringem fertigungstechnischen Aufwand herstellbaren Lenkradbaugruppe für ein Kraftfahrzeug, die schnell und einfach montierbar sowie optisch ansprechend ist und darüber hinaus im Fahrbetrieb keine unerwünschten Geräusche erzeugt.

Erfindungsgemäß wird diese Aufgabe gelöst durch eine Lenkradbaugruppe der eingangs genannten Art, bei welcher zwischen dem rückseitigen Abdeckelement und der frontseitigen Blende ein komprimiertes, elastisches Vorspannelement angeordnet ist, welches das rückseitige Abdeckelement und die frontseitige Blende voneinander weg beaufschlagt, sodass das Abdeckelement und die Blende eine vorgespannte Verbindung ausbilden. Diese Vorspannung nimmt dauerhaft das Spiel aus der Verbindung zwischen Blende und Abdeckelement, sodass keine unerwünschten Geräusche entstehen können. Ferner ist über das elastische Vorspannelement auch ein gewisser Ausgleich von Maßtoleranzen der Rastbauteile möglich, ohne dass die Vorspannung verloren geht.

Erfindungsgemäß ist das elastische Vorspannelement als elastischer Vorspannabschnitt in das rückseitige Abdeckelement und/oder in die frontseitige Blende integriert, wodurch sich der Fertigungsaufwand für die Lenkradbaugruppe reduziert.

Dabei kann das Abdeckelement und/oder die Blende als Zweikomponenten-Spritzgussteil ausgeführt sein, wobei der Vorspannabschnitt aus einem ersten Kunststoff, insbesondere einem Elastomer, und der verbleibende, flächige Verkleidungsabschnitt des Abdeckelements und/oder der Blende aus einem vom ersten Kunststoff verschiedenen zweiten Kunststoff, insbesondere einem formstabilen Thermoplast oder Duroplast, hergestellt ist. Konkret besteht der Verkleidungsabschnitt zum Beispiel aus Polyurethan und der Vorspannabschnitt zum Beispiel aus Gummi oder Silikon.

Gemäß einer bevorzugten Ausführungsform der Lenkradbaugruppe weist das rückseitige Abdeckelement erste Rastelemente und die frontseitige Blende zweite Rastelemente auf, wobei die ersten Rastelemente mit den zweiten Rastelementen so zusammenwirken, dass das Abdeckelement und die Blende eine vorgespannte Rastverbindung ausbilden. Die ersten und zweiten Rastelemente können bereits bei der Herstellung des Abdeckelements bzw. der Blende einstückig an das jeweilige Bauteil angeformt werden, um den Fertigungsaufwand der Lenkradbaugruppe weiter zu reduzieren. Die für Rastverbindungen typische Verrastluft wird durch das komprimierte elastische Vorspannelement und die daraus resultierende Vorspannung dauerhaft aus der Verbindung zwischen Blende und Abdeckelement genommen, sodass im Fahrbetrieb keine unerwünschten Geräusche in der Lenkradbaugruppe entstehen können.

Vorzugsweise sind die ersten und zweiten Rastelemente in dieser Ausführungsform aus dem zweiten Kunststoff gefertigt, der eine höhere Steifigkeit als der erste Kunststoff aufweist sowie insbesondere formstabil ist. Die ersten und zweiten Rastelemente sorgen dadurch für eine äußerst exakte Positionierung des Abdeckelements relativ zur Blende und bilden außerdem eine besonders zuverlässige und widerstandsfähige Rastverbindung aus.

Ferner ist das rückseitige Abdeckelement bevorzugt am Lenkradskelett befestigt, insbesondere mit dem Lenkradskelett verschraubt. Dies führt zu einer besonders robusten Bauweise der Lenkradbaugruppe, bei der das rückseitige Abdeckelement und über dieses Abdeckelement auch die frontseitige Blende zuverlässig am Lenkradskelett fixiert sind.

Vorzugsweise umfasst die Lenkradbaugruppe ein Abdeckelement mit einem flächigen Verkleidungsabschnitt, an den Rastelemente zur Verrastung mit einem Rastbauteil der Lenkradbaugruppe angeformt sind, sowie einem Vorspannabschnitt, der angrenzend an den Verkleidungsabschnitt zur Kontaktierung mit dem Rastbauteil der Lenkradbaugruppe vorgesehen ist, wobei der Vorspannabschnitt aus einem elastischen Kunststoff und der Verkleidungsabschnitt aus einem anderen Material hergestellt ist, welches eine höhere Steifigkeit aufweist als der elastische Kunststoff. Der Vorspannabschnitt bildet insbesondere einen oder mehrere langgestreckte Linienkontakte mit dem Rastbauteil aus und beaufschlagt die zusammenwirkenden Rastelemente in ihrem verrasteten Zustand dauerhaft gegeneinander, sodass zwischen dem Rastbauteil und dem Abdeckelement eine vorgespannte Rastverbindung entsteht. Das Rastbauteil kann insbesondere eine frontseitige Blende der Lenkradbaugruppe sein.

Gemäß einer Ausführungsvariante des Abdeckelements sind der Verkleidungsabschnitt und der Vorspannabschnitt dauerhaft miteinander verbunden und nicht-zerstörungsfrei voneinander lösbar, insbesondere wobei das Abdeckelement als Zweikomponenten-Spritzgussteil ausgeführt ist.

Vorzugsweise ist der Vorspannabschnitt aus einem elastischen ersten Kunststoff, insbesondere aus einem Elastomer wie zum Beispiel Gummi oder Silikon, und der Verkleidungsabschnitt aus einem vom ersten Kunststoff verschiedenen, formstabilen zweiten Kunststoff, insbesondere einem Duroplast oder Thermoplast wie zum Beispiel Polyurethan, hergestellt.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Explosionsansicht einer erfindungsgemäßen Lenkradbaugruppe;
- Figur 2 einen Detailschnitt II-II der zusammengesetzten Lenkradbaugruppe gemäß Figur 1 im Bereich einer Rastverbindung; und
- Figur 3 eine perspektivische Ansicht eines erfindungsgemäßen Abdeckelements für die Lenkradbaugruppe gemäß den Figuren 1 und 2.

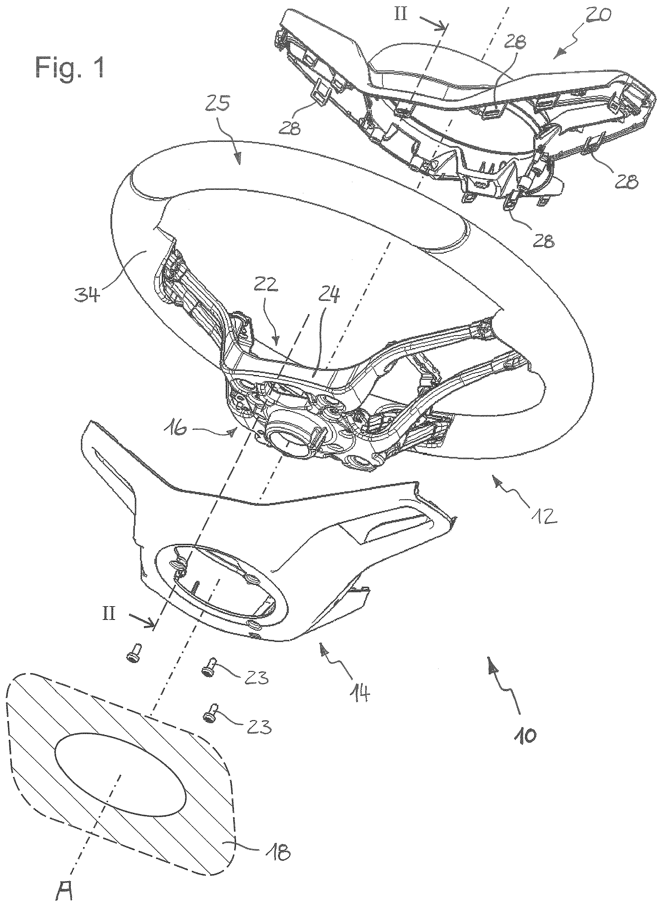

Die Figur 1 zeigt eine Lenkradbaugruppe 10 für ein Kraftfahrzeug, die in ihrem montierten Zustand zur Fahrtrichtungsänderung des Kraftfahrzeugs um eine Lenkachse A drehbar ist. Die Lenkradbaugruppe 10 umfasst dabei ein Lenkradskelett 12 aus Metall, ein rückseitiges Abdeckelement 14 zur Verkleidung einer Skelettrückseite 16, welche im montierten Zustand der Lenkradbaugruppe 10 einer schematisch angedeuteten Armaturentafel 18 des Kraftfahrzeugs zugewandt ist, sowie eine frontseitige Blende 20 zur Verkleidung einer Skelettvorderseite 22, welche im montierten Zustand der Lenkradbaugruppe 10 von der Armaturentafel 18 des Kraftfahrzeugs abgewandt ist, wobei das rückseitige Abdeckelement 14 und die frontseitige Blende 20 randseitig aneinander angrenzen und miteinander verbunden sind.

Das rückseitige Abdeckelement 14 ist außerdem am Lenkradskelett 12 befestigt, insbesondere an der Skelettrückseite 16 durch Schrauben 23 mit einem zentralen Nabenabschnitt 24 des Lenkradskeletts 12 verschraubt. Das Lenkradskelett 12 weist gemäß Figur 1 ferner einen Kranzabschnitt 25 auf, der wenigstens abschnittsweise mit einer Umhüllung 34, insbesondere einer geschäumten Umhüllung 34 versehen ist.

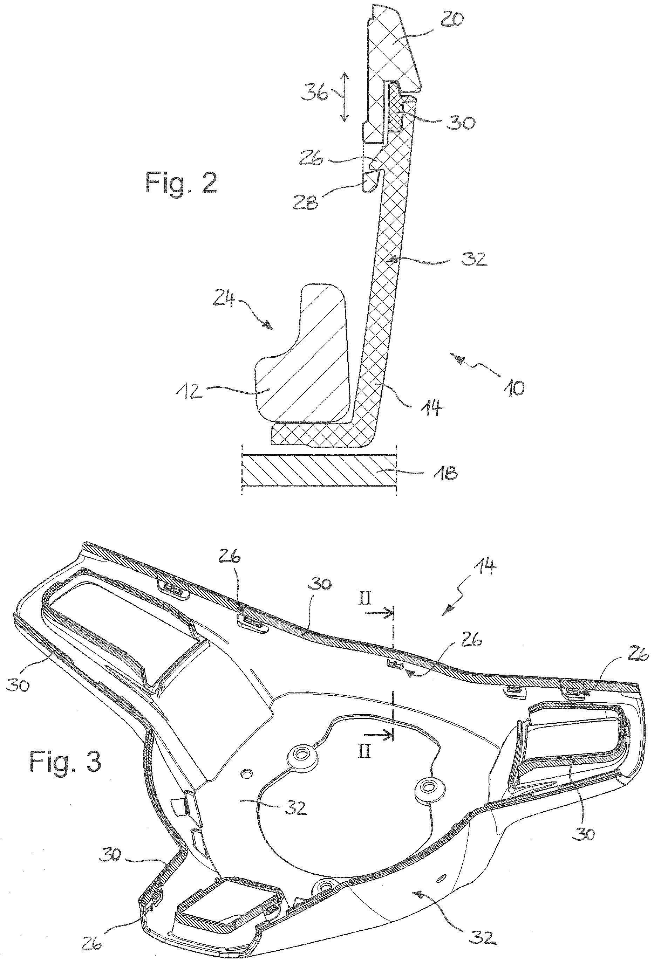

Anhand eines in Figur 2 dargestellten Detailschnitts II-II durch die zusammengesetzte Lenkradbaugruppe 10 gemäß Figur 1 wird deutlich, dass zwischen dem rückseitigen Abdeckelement 14 und der frontseitigen Blende 20 ein komprimiertes, elastisches Vorspannelement angeordnet ist. Das Vorspannelement beaufschlagt das rückseitige Abdeckelement 14 und die frontseitige Blende 20 axial voneinander weg (vgl. Pfeil 36), sodass das Abdeckelement 14 und die Blende 20 eine vorgespannte Verbindung ausbilden.

Konkret grenzen ein axialer Rand des rückseitigen Abdeckelements 14 und ein axialer Rand der frontseitigen Blende 20 aneinander an, wobei sich das komprimierte, elastische Vorspannelement als lineare Vorspannlippe über wenigstens 50%, insbesondere über wenigstens 80% der aneinandergrenzende Randlänge zwischen dem Abdeckelement 14 und der Blende 20 erstreckt (siehe auch Figur 3). Die Vorspannung verteilt sich dann besonders gleichmäßig über die aneinandergrenzenden Randbereiche, sodass unerwünschte Spannungsspitzen zuverlässig vermieden werden.

Im vorliegenden Ausführungsbeispiel der Lenkradbaugruppe 10 weist das rückseitige Abdeckelement 14 mehrere erste Rastelemente 26 und die frontseitige Blende 20 mehrere zweite Rastelemente 28 auf, wobei die ersten Rastelemente 26 mit den zweiten Rastelementen 28 so zusammenwirken, dass das Abdeckelement 14 und die Blende 20 eine (axial) vorgespannte Rastverbindung ausbilden.

Generell kann das elastische Vorspannelement als elastischer Vorspannabschnitt 30 in das rückseitige Abdeckelement 14 und/oder in die frontseitige Blende 20 integriert sein, um die Anzahl der Einzelbauteile zu reduzieren und damit die Herstellung der Lenkradbaugruppe 10 zu vereinfachen. In diesem Fall ist das Abdeckelement 14 und/oder die Blende 20 dann insbesondere als Zweikomponenten-Spritzgussteil ausgeführt, wobei der Vorspannabschnitt 30 aus einem ersten Kunststoff, beispielsweise einem Elastomer, und ein verbleibender, flächiger Verkleidungsabschnitt 32 des Abdeckelements 14 und/oder der Blende 20 aus einem vom ersten Kunststoff verschiedenen zweiten Kunststoff, beispielsweise einem Thermoplast oder Duroplast, hergestellt ist.

In der dargestellten Ausführungsform der Lenkradbaugruppe 10 weist ausschließlich das rückseitige Abdeckelement 14 einen integrierten, elastischen Vorspannabschnitt 30 als Vorspannelement auf.

Entsprechend ist in Figur 3 das Abdeckelement 14 in einer Detailansicht dargestellt, mit einem flächigen Verkleidungsabschnitt 32, an den (erste) Rastelemente 26 zur Verrastung mit einem Rastbauteil der Lenkradbaugruppe 10 angeformt sind, sowie einem Vorspannabschnitt 30 (schraffiert hervorgehoben), der angrenzend an den Verkleidungsabschnitt 32 zur Kontaktierung mit dem Rastbauteil der Lenkradbaugruppe 10 vorgesehen ist. Der Vorspannabschnitt 30 ist dabei aus einem elastischen Kunststoff und der Verkleidungsabschnitt 32 aus einem anderen Material hergestellt, welches eine höhere Steifigkeit aufweist als der elastische Kunststoff. Das Rastbauteil entspricht in den Figuren 1 und 2 der frontseitigen Blende 20 der Lenkradbaugruppe 10, wobei jedoch generell auch Ausführungsvarianten denkbar sind, bei denen andere Komponenten der Lenkradbaugruppe 10 als Rastbauteil dienen.

Konkret ist der Vorspannabschnitt 30 aus dem elastischen ersten Kunststoff, z.B. aus Gummi oder Silikon, und der Verkleidungsabschnitt 32 aus dem vom ersten Kunststoff verschiedenen, formstabilen zweiten Kunststoff, z.B. aus Polyurethan, hergestellt.

Der Verkleidungsabschnitt 32 und der Vorspannabschnitt 30 des rückseitigen Abdeckelements 14 sind gemäß Figur 3 dauerhaft miteinander verbunden und nicht zerstörungsfrei voneinander lösbar, wobei das Abdeckelement 14 insbesondere als Zweikomponenten-Spritzgussteil ausgeführt ist.

Die mit dem Abdeckelement 14 verrastbare Blende 20 ist bevorzugt auch aus dem zweiten Kunststoff hergestellt, um die Anzahl der unterschiedlichen Materialien zur Fertigung der Lenkradbaugruppe 10 gering zu halten. Dementsprechend sind sowohl die ersten Rastelemente 26 als auch die zweiten Rastelemente 28 aus dem formstabilen, zweiten Kunststoff mit vergleichsweise hoher Steifigkeit gefertigt und bilden somit in vorteilhafter Weise eine zuverlässige und robuste Rastverbindung aus.

## Patentansprüche

1. Lenkradbaugruppe für ein Kraftfahrzeug, mit
einem Lenkradskelett (12),
einem rückseitigen Abdeckelement (14) zur Verkleidung einer Skelettrückseite (16), welche im montierten Zustand der Lenkradbaugruppe (10) einer Armaturentafel (18) des Kraftfahrzeugs zugewandt ist, sowie
einer frontseitigen Blende (20) zur Verkleidung einer Skelettvorderseite (22), welche im montierten Zustand der Lenkradbaugruppe (10) von der Armaturentafel (18) des Kraftfahrzeugs abgewandt ist,
wobei das rückseitige Abdeckelement (14) und die frontseitige Blende (20) aneinander angrenzen und miteinander verbunden sind,
wobei zwischen dem rückseitigen Abdeckelement (14) und der frontseitigen Blende (20) ein komprimiertes, elastisches Vorspannelement angeordnet ist, welches das rückseitige Abdeckelement (14) und die frontseitige Blende (20) voneinander weg beaufschlagt, sodass das Abdeckelement (14) und die Blende (20) eine vorgespannte Verbindung ausbilden,
**dadurch gekennzeichnet, dass** das elastische Vorspannelement als elastischer Vorspannabschnitt (30) in das rückseitige Abdeckelement (14) und/oder in die frontseitige Blende (20) integriert ist.

2. Lenkradbaugruppe nach Anspruch 1, **dadurch gekennzeichnet, dass** das Abdeckelement (14) und/oder die Blende (20) als Zweikomponenten-Spritzgussteil ausgeführt ist, wobei der Vorspannabschnitt (30) aus einem ersten Kunststoff und ein verbleibender, flächiger Verkleidungsabschnitt (32) des Abdeckelements (14) und/oder der Blende (20) aus einem vom ersten Kunststoff verschiedenen zweiten Kunststoff hergestellt ist.

3. Lenkradbaugruppe nach einem der vorhergehenden Ansprüche, **dadurch gekennzeichnet, dass** das rückseitige Abdeckelement (14) erste Rastelemente (26) und die frontseitige Blende (20) zweite Rastelemente (28) aufweist, wobei die ersten Rastelemente (26) mit den zweiten Rastelementen (28) so zusammenwirken, dass das Abdeckelement (14) und die Blende (20) eine vorgespannte Rastverbindung ausbilden.

4. Lenkradbaugruppe nach Anspruch 2 und 3, **dadurch gekennzeichnet, dass** die ersten und zweiten Rastelemente (26, 28) aus dem zweiten Kunststoff hergestellt sind.

5. Lenkradbaugruppe nach einem der vorhergehenden Ansprüche, **dadurch gekennzeichnet, dass** das rückseitige Abdeckelement (14) am Lenkradskelett (12) befestigt, insbesondere mit dem Lenkradskelett (12) verschraubt ist.

6. Lenkradbaugruppe (10) nach einem der vorhergehenden Ansprüche, **gekennzeichnet durch** ein Abdeckelement mit
einem flächigen Verkleidungsabschnitt (32), an den Rastelemente (26) zur Verrastung mit einem Rastbauteil der Lenkradbaugruppe (10) angeformt sind, sowie
einem Vorspannabschnitt (30), der angrenzend an den Verkleidungsabschnitt (32) zur Kontaktierung mit dem Rastbauteil der Lenkradbaugruppe (10) vorgesehen ist,
wobei der Vorspannabschnitt (30) aus einem elastischen Kunststoff und der Verkleidungsabschnitt (32) aus einem anderen Material hergestellt ist, welches eine höhere Steifigkeit aufweist als der elastische Kunststoff.

7. Lenkradbaugruppe nach Anspruch 6, **dadurch gekennzeichnet, dass** der Verkleidungsabschnitt (32) und der Vorspannabschnitt (30) dauerhaft miteinander verbunden und nicht-zerstörungsfrei voneinander lösbar sind, insbesondere wobei das Abdeckelement (14) als Zweikomponenten-Spritzgussteil ausgeführt ist.

8. Lenkradbaugruppe nach Anspruch 6 oder 7, **dadurch gekennzeichnet, dass** der Vorspannabschnitt (30) aus einem elastischen ersten Kunststoff und der Verkleidungsabschnitt (32) aus einem vom ersten Kunststoff verschiedenen, formstabilen zweiten Kunststoff hergestellt ist.

## Claims

1. A steering wheel assembly for an automotive vehicle, comprising
a steering wheel skeleton (12),
a back cover element (14) for lining a skeleton back (16) which, in the assembled state of the steering wheel assembly (10), faces an instrument panel (18) of the automotive vehicle, and
a front panel (20) for lining a skeleton front (22) which, in the assembled state of the steering wheel assembly (10), faces away from the instrument panel (18) of the automotive vehicle,
the back cover element (14) and the front panel (20) abutting on each other and being connected to each other,
wherein a compressed elastic biasing element which forces the back cover element (14) and the front panel (20) away from each other is arranged between the back cover element (14) and the front panel (20) so that the cover element (14) and the panel (20) form a biased connection,
**characterized in that** the elastic biasing element is integrated as an elastic biasing portion (30) in the back cover element (14) and/or in the front panel (20).

2. The steering wheel assembly according to claim 1, **characterized in that** the cover element (14) and/or the panel (20) are designed as a two-component injection molded part, the biasing portion (30) being made of a first plastic and a remaining flat lining portion (32) of the cover element (14) and/or the panel (20) being made of a second plastic different from the first plastic.

3. The steering wheel assembly according to any one of the preceding claims, **characterized in that** the back cover element (14) includes first latching elements (26) and the front panel (20) includes second latching elements (28), the first latching elements (26) interacting with the second latching elements (28) so that the cover element (14) and the panel (20) form a biased latching connection.

4. The steering wheel assembly according to claim 2 and 3, **characterized in that** the first and second latching elements (26, 28) are made of the second plastic.

5. The steering wheel assembly according to any one of the preceding claims, **characterized in that** the back cover element (14) is secured to the steering wheel skeleton (12), specifically screwed with the steering wheel skeleton (12).

6. The steering wheel assembly (10) according to any one of the preceding claims, **characterized by** a cover element comprising
a flat lining portion (32) on which latching elements (26) for latching with a latching component of the steering wheel assembly (10) are integrally formed, and
a biasing portion (30) provided adjacent to the lining portion (32) for contacting the latching component of the steering wheel assembly (10),
wherein the biasing portion (30) is made of an elastic plastic and the lining portion (32) is made of a different material which has a higher rigidity than the elastic plastic.

7. The steering wheel assembly according to claim 6, **characterized in that** the lining portion (32) and the biasing portion (30) are permanently connected to each other and cannot be separated from each other non-destructively, specifically wherein the cover element (14) is designed as a two-component injection molded part.

8. The steering wheel assembly according to claim 6 or 7, **characterized in that** the biasing portion (30) is made of an elastic first plastic and the lining portion (32) is made of a dimensionally stable second plastic different from the first plastic.

## Revendications

1. Ensemble de volant de direction pour un véhicule automobile, avec
une armature de volant de direction (12),
un élément de recouvrement arrière (14) pour l'habillage d'une face arrière de l'armature (16) lequel, à l'état monté de l'ensemble de volant de direction (10), est orientée vers un tableau de bord (18) du véhicule automobile, ainsi que
d'un cache avant (20) pour l'habillage d'une face avant d'une armature (22) lequel, à l'état monté de l'ensemble de volant de direction (10), est opposée au tableau de bord (18) du véhicule automobile,
pour lequel l'élément de recouvrement arrière (14) et le cache avant (20) sont contigus et reliés l'un à l'autre,
pour lequel un élément de précontrainte élastique comprimé est disposé entre l'élément de recouvrement arrière (14) et le cache avant (20), lequel sollicite l'élément de recouvrement arrière (14) et le cache avant (20) en les éloignant l'un de l'autre, de sorte que l'élément de recouvrement (14) et le cache (20) forment une liaison précontrainte,
, **caractérisé en ce que** l'élément de précontrainte élastique est intégré en tant que section de précontrainte élastique (30) dans l'élément de recouvrement arrière (14) et/ou dans le cache avant (20).

2. Ensemble de volant de direction selon la revendication 1, **caractérisé en ce que** l'élément de recouvrement (14) et/ou le cache (20) est réalisé sous la forme d'une pièce moulée par injection à deux composants, pour lequel la section de précontrainte (30) est fabriquée à partir d'une première matière plastique et une section d'habillage (32) plane restante de l'élément de recouvrement (14) et/ou du cache (20) estt fabriquée à partir d'une deuxième matière plastique différente de la première matière plastique.

3. Ensemble de volant de direction selon l'une des revendications précédentes, **caractérisé en ce que** l'élément de recouvrement arrière (14) présente des premiers éléments d'encliquetage (26) et le cache avant (20) des deuxièmes éléments d'encliquetage (28), pour lequel les premiers éléments d'encliquetage (26) s'assemblent avec les deuxièmes éléments d'encliquetage (28) de telle sorte que l'élément de recouvrement (14) et le cache (20) forment une liaison par encliquetage précontrainte.

4. Ensemble de volant de direction selon les revendications 2 et 3, **caractérisé en ce que** les premier et deuxième éléments d'encliquetage (26, 28) sont fabriqués à partir de la deuxième matière plastique.

5. Ensemble de volant de direction selon l'une des revendications précédentes, **caractérisé en ce que** l'élément de recouvrement arrière (14) est fixé à l'armature de volant de direction (12), en particulier est vissé à l'armature de volant de direction (12).

6. Ensemble de volant de direction (10) selon l'une des revendications précédentes, **caractérisé par** un élément de recouvrement avec
une section d'habillage plane (32), sur laquelle sont formés des éléments d'encliquetage (26) pour l'encliquetage avec un composant d'encliquetage de l'ensemble de volant de direction (10), ainsi que
une section de précontrainte (30), qui est prévue de manière adjacente à la section d'habillage (32) pour entrer en contact avec le composant d'encliquetage de l'ensemble de volant de direction (10),
pour lequel la section de précontrainte (30) est fabriquée en une matière plastique élastique et la section d'habillage (32) est fabriquée en un autre matériau, lequel présente une rigidité plus élevée que la matière plastique élastique.

7. Ensemble de volant de direction selon la revendication 6, **caractérisé en ce que** la section d'habillage (32) et la section de précontrainte (30) sont reliées entre elles de manière durable et peuvent être détachées l'une de l'autre de manière non destructive, en particulier dans lequel l'élément de recouvrement (14) est réalisé sous forme de pièce moulée par injection à deux composants.

8. Ensemble de volant de direction selon la revendication 6 ou 7, **caractérisé en ce que** la section de précontrainte (30) est fabriquée à partir d'une première matière plastique élastique et la section d'habillage (32) est fabriquée à partir d'une deuxième matière plastique indéformable, différente de la première matière plastique.
